# EUROPÄISCHE PATENTSCHRIFT

(11) **EP 2 149 970 B1**
(45) Veröffentlichungstag und Bekanntmachung des Hinweises auf die Patenterteilung: **04.03.2015**
(21) Anmeldenummer: 09450129.3
(22) Anmeldetag: 16.07.2009
(51) Int. Cl.: H02K 17/16, H02K 1/28

(54) **Rotor für Asynchronmaschinen**
Rotor for asynchronous engines
Rotor pour machines asynchrones

(30) Priorität: 31.07.2008 AT 11852008; 05.12.2008 AT 19002008
(43) Veröffentlichungstag der Anmeldung: 03.02.2010
(73) Patentinhaber: Traktionssysteme Austria GmbH, 2351 Wiener Neudorf (AT)
(72) Erfinder: Neudorfer, Harald, 2514 Traiskirchen (AT)
(74) Vertreter: Sonn & Partner Patentanwälte

(56) Entgegenhaltungen:
- DE-B1- 2 536 390
- DE-C- 843 869
- GB-A- 234 191
- US-B1- 6 177 750

## Beschreibung

Die Erfindung betrifft einen Rotor für Asynchronmaschinen, mit einer Rotorwelle, einem mit der Rotorwelle drehfest verbundenen und durch seitliche Pressplatten abgeschlossenen Rotorblechpaket mit Nuten zur Aufnahme von Kurzschlussstäben, welche an den Enden über Kurzschlussringe miteinander verbunden sind, und mit Einrichtungen zur Sicherung der Verbindung zwischen den Enden der Kurzschlussstäbe und den Kurzschlussringen, wobei jede Pressplatte eine Einrichtung zur formschlüssigen Verbindung mit dem jeweiligen Kurzschlussring aufweist.

Eine Asynchronmaschine besitzt einen Rotor, der entweder ständig (Kurzschlussläufer) oder fallweise (Schleiferringläufer) kurzgeschlossen wird. Eine Asynchronmaschine kann sowohl als Motor als auch Generator verwendet werden. Der Vorteil gegenüber anderen elektrischen Maschinen besteht darin, dass zwischen Rotor und Stator kein Kommutator mit Bürsten notwendig ist. Rotoren von Asynchronmaschinen, die ständig kurzgeschlossen sind, also sogenannte Kurzschlussläufer, bestehen aus massiven Stäben, welche beidseitig über sogenannte Kurzschlussringe miteinander leitend verbunden sind. Die Kurzschlussstäbe werden in Nuten an der Außenseite des Rotorblechpakets oder in Bohrungen im Rotorblechpaket angeordnet. Die Enden der Kurzschlussstäbe werden mit den Kurzschlussringen üblichweise durch Löten oder Schweißen miteinander verbunden. Die Kurzschlussstäbe und Kurzschlussringe bestehen aus elektrisch leitfähigen Materialien, insbesondere aus Kupfer oder Kupferlegierungen. Zur Sicherung der Verbindung zwischen den Enden der Kurzschlussstäbe und den Kurzschlussringen können Schrumpfringe über den Kurzschlussringen angeordnet werden. Beispielsweise beschreibt die DE 843 869 einen derart ausgebildeten Rotor für Asynchronmotoren.

Die US 6 177 750B1 beschreibt einen Rotor für Asynchronmaschinen der gegenständlichen Art, welcher insbesondere für besonders hohe Drehzahlen ausgebildet ist.

Die DE 25 36 390 B1 betrifft ein Herstellungsverfahren für einen Kurzschlussläufer einer elektrischen Maschine im Spritzgussverfahren, wobei die Kutzschlussstäbe gleichzeitig und einstückig mit den Kurzschlussringen hergestellt werden können.

Zur Vermeidung der aufwendigen Herstellung der Lötverbindung zwischen den Enden der Kurzschlussstäbe und den Kurzschlussringen wurden verbesserte Verfahren zur Herstellung von Rotoren für Asynchronmaschinen entwickelt. Beispielsweise beschreibt die DE 197 29 432 C1 eine Asynchronmaschine mit einem Kurzschlussläufer, der durch zwei Kurzschlusshalbkäfige gebildet ist, bei denen die Verbindung der Enden der Kurzschlussstäbe mit den Kurzschlussringen bereits vorgefertigt ist. Es müssen somit nur mehr die beiden Kurzschlusshalbkäfige an den zugewandten Stoßseiten der Kurzschlussstäbe miteinander verbunden werden.

Eine ähnlich Konstruktion eines aus zwei Halbteilen bestehenden Kurzschlusskäfigs ist beispielsweise aus der EP 1 039 618 A1 bekannt. Dabei sind die Kurzschlussringe mit entsprechenden Öffnungen für die Aufnahme der Enden der Kurzschlussstäbe ausgebildet. Ein Nachteil bei üblichen Kurzschlusskäfig-Konstruktionen mit miteinander verschweißten Kurzschlussstäben und Kurzschlussringen und darüber angeordneten Schrumpfringen besteht darin, dass besonders bei hohen Drehzahlen der Asynchronmaschinen hohe Fliehkräfte auf die Verbindungen zwischen den Kurzschlussringen und Kurzschlussstäben auftreten. Auch durch Eigenresonanzen des gesamten Systems kommt es immer wieder zu unzulässig hohen Kräften auf die Teile des Kurzschlusskäfigs, welche in einem Bruch der Kurzschlussstäbe resultieren können. Darüber hinaus ist die Herstellung von Kurzschlusskäfigen bzw. Rotoren von Asynchronmaschinen gemäß dem Stand der Technik relativ aufwendig und mit hohen Kosten verbunden.

Die Aufgabe der vorliegenden Erfindung besteht daher in der Schaffung eines oben genannten Rotors für Asynchronmaschinen, welcher insbesondere auch besonders hohen Drehzahlen Stand hält und darüber hinaus möglichst einfach und kostengünstig herstellbar ist. Nachteile bekannter Rotoren sollen vermieden oder zumindest reduziert werden.

Gelöst wird die erfindungsgemäße Aufgabe durch einen oben genannten Rotor für Asynchronmaschinen, bei dem jede Pressplatte mit dem Kurzschlussring in tangentialer Richtung durch komplementär gestaltete Ausformungen in der Pressplatte und am Kurzschlussring in Umfangsrichtung formschlüssig verbunden ist. Durch diese Maßnahme der formschlüssigen Verbindung der Pressplatte mit dem jeweiligen Kurzschlussring kann eine Verbesserung hinsichtlich der Eigenresonanzen des Systems erzielt werden, da die Masse des Gesamtsystems des Kurzschlusskäfigs größer ist, da die Pressplatten nunmehr zur Masse dieses Systems dazugezählt werden. In der Folge kann die Bruchgefahr der Kurzschlussstäbe, welche insbesondere bei höheren Drehzahlen der Maschine hoch ist, reduziert werden. Durch die formschlüssige Verbindung in tangentialer Richtung durch die komplementär gestalteten Ausformungen an der Pressplatte und dem Kurzschlussring können Relativbewegungen und Schwingungen in radialer bzw. tangentialer Richtung zwischen der Pressplatte und dem Kurzschlussring, welche in der Praxis auftreten, wirkungsvoll vermieden oder zumindest reduziert werden.

Diese Einrichtung zur formschlüssigen Verbindung an den Pressplatten des Rotors kann in einfacher Art und Weise durch eine ringförmige Stufe zur Auflage, zumindest eines Teils des jeweiligen Kurzschlussringes, realisiert werden. Dies stellt eine einfach und kostengünstig herstellbare Konstruktionsvariante dar.

Gemäß einem weiteren Merkmal der Erfindung ist vorgesehen, dass die Einrichtungen zur Sicherung der Verbindung zwischen den Enden der Kurzschlussstäbe und den Kurzschlussringen durch Schrumpfkappen gebildet sind. Im Gegensatz zum Stand der Technik, wo Schrumpfringe verwendet werden, bieten derartige Schrumpfkappen eine höhere Steifigkeit, da sie im Gegensatz zu einem Schrumpfring auch einen Absatz oder dgl. aufweisen. Darüber hinaus ist bei Schrumpfkappen die Montage vereinfacht, da es durch den kappenförmigen Absatz automatisch zu einer axialen Ausrichtung der Schrumpfkappe in Bezug auf den Kurzschlussring kommt. Im Gegensatz dazu muss ein Schrumpfring nach dem Stand der Technik genau positioniert werden, sodass ein üblicherweise an der Innenseite des Schrumpfrings vorgesehener Absatz oder dgl. in eine entsprechende Nut oder dgl. an der Außenseite des Kurzschlussringes passt. Die entsprechend dimensionierte Schrumpfkappe presst den Kurzschlussring an jeder Seite des Rotors der Asynchronmaschine an die erfindungsgemäße Einrichtung zur formschlüssigen Verbindung an der Pressplatte, welche beispielsweise durch eine ringförmige Stufe gebildet ist.

Wenn die Schrumpfkappe im Wesentlichen L-förmigen Umfangsquerschnitt aufweist, lässt sich diese besonders leicht herstellen und besitzt optimale Stabilität.

Die Schrumpfkappen sind, wie bei Schrumpfringen an sich bekannt, aus antimagnetischem Material, beispielsweise einer Bronzelegierung, gebildet.

Die Ausformungen können beispielsweise wellenförmig, rechteckig oder dreieckig ausgebildet sein. Im Falle rechteckiger oder dreieckförmiger Ausformungen ist es von Vorteil, wenn die Kanten der rechteckigen oder dreieckigen Ausformung entsprechend abgerundet ausgebildet sind.

Die Enden der Kurzschlussstäbe können mit den Kurzschlussringen verlötet oder verschweißt sein.

Gemäß einem weiteren Merkmal der Erfindung ist vorgesehen, dass die Pressplatten Öffnungen in Übereinstimmung mit Kühlkanälen im Rotorblechpaket aufweisen. Durch diese Öffnungen in den Pressplatten wird somit eine Kühlung des Rotorblechpakets ermöglicht und zusätzlich das Gewicht der Pressplatten reduziert.

Die Nuten zur Aufnahme der Kurzschlussstäbe im Rotorblechpaket können offen oder auch zumindest teilweise bzw. vollständig geschlossen ausgebildet sein.

Die Kurzschlussstäbe und somit auch die Nuten an der Außenseite des Rotorblechpakets sind vorzugsweise in an sich bekannter Weise gegenüber der axialen Richtung schräg verlaufend angeordnet.

Die vorliegende Erfindung wird an Hand der beigefügten Zeichnungen näher erläutert.

Darin zeigen:
- Fig. 1: ein Schnittbild durch einen Rotor einer Asynchronmaschine gemäß dem Stand der Technik;
- Fig. 2: ein Schnittbild durch einen Teil des Rotors einer Asynchronmaschine mit einer ringförmigen Stufe auf jeder Pressplatte ;
- Fig. 3: den Rotor gemäß Fig. 2 mit angeordneten Kurzschlussringen;
- Fig. 4: den Rotor gemäß den Fig. 2 und 3 mit aufgesetzten Schrumpfkappen;
- Fig. 5: einen Teil eines Rotors, wobei die Kurzschlussringe mit den Kurzschlussstäben verschraubt sind; und
- Fig. 6-9: Ausschnitte von Seitenansichten auf einen Rotor gemäß der vorliegenden Erfindung mit verschieden gestalteten Ausformungen zwischen dem Pressring und dem Kurzschlussring in Umfangsrichtung gemäß der vorliegenden Erfindung.

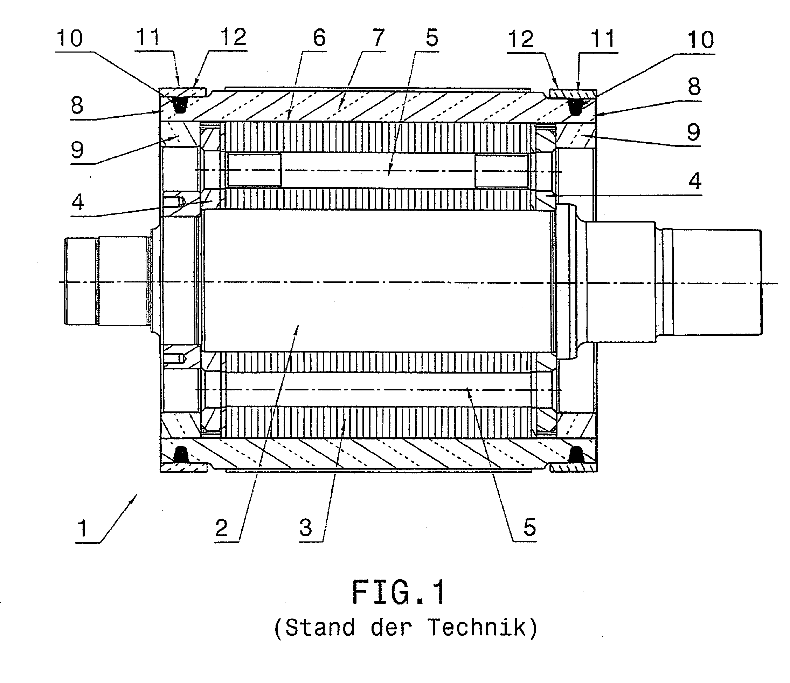

Fig. 1 zeigt ein Schnittbild durch einen Rotor 1 einer Asynchronmaschine gemäß dem Stand der Technik. Mit der Rotorwelle 2 ist ein Rotorblechpaket 3 drehfest verbunden. Das Rotorblechpaket 3 wird seitlich durch Pressplatten 4 zusammengehalten. Üblicherweise werden die Pressplatten 4 über Schrauben (nicht dargestellt), welche durch Öffnungen 5 im Rotorblechpaket 3 angeordnet werden, miteinander verschraubt. Zusätzlich können die Öffnungen 5 im Rotorblechpaket 3 auch zur Führung eines Kühlmediums dienen.

In entsprechenden Nuten 6 an der Außenseite des Rotorblechpakets 3 werden Kurzschlussstäbe 7 angeordnet. Die Nuten 6 können in an sich bekannter Weise schräg zur axialen Richtung verlaufend angeordnet sein. Die Enden 8 der Kurzschlussstäbe 7 sind über Kurzschlussringe 9 miteinander verbunden. Die Kurzschlussstäbe 7 und die Kurzschlussringe 9 bestehen üblicherweise aus besonders gut elektrisch leitfähigen Materialien, beispielsweise Kupfer oder Kupferlegierungen. Die Verbindung zwischen den Kurzschlussstäben 7 und Kurzschlussringen 9 erfolgt üblicherweise durch Löten oder Schweißen. In Fig. 1 ist eine entsprechende Schweißnaht 10 dargestellt, welche entlang des Umfangs der Kurzschlussringe 9 verläuft und somit die Kurzschlussstäbe 7 mit den Kurzschlussringen 9 elektrisch leitend miteinander verbindet. Die Verbindung zwischen den Enden 8 der Kurzschlussstäbe 7 und den Kurzschlussringen 9 wird üblicherweise noch mit einer Einrichtung 11 gesichert, welche beispielsweise durch einen Schrumpfring 12 gebildet sein kann. Der Schrumpfring 12 ist üblicherweise aus antimagnetischem Material, beispielsweise einer Bronzelegierung, hergestellt und wird über dem Kurzschlussring 9 platziert und sichert somit die Verbindung zwischen den Enden 8 der Kurzschlussstäbe 7 und den Kurzschlussringen 9. Zur exakten Positionierung der Schrumpfringe 12 befinden sich häufig an der Innenseite der Schrumpfringe 12 Ausbuchtungen oder dgl., welche in entsprechende Nuten oder dgl. an der Außenseite der Kurzschlussringe 9 und Enden 8 der Kurzschlussstäbe 7 passen (nicht dargestellt). Dies erhöht jedoch den Aufwand der Herstellung derartiger Rotoren 1 bzw. Kurzschlusskäfige.

Durch Eigenresonanzen der Kurzschlusskäfige derartiger Rotoren 1 von Asynchronmaschinen kommt es insbesondere bei hohen Drehzahlen häufig zu Brüchen der Kurzschlusstäbe 7 im Bereich der Verbindungen mit den Kurzschlussringen 9. Bei entsprechenden Drehzahlen der Rotoren 1 werden die Verbindungsbereiche zwischen den Enden 8 der Kurzschlussstäbe 7 und den Kurzschlussringen 9 in radialer Richtung nach außen bewegt, und es entstehen bleibende Verformungen des Kurzschlusskäfigs.

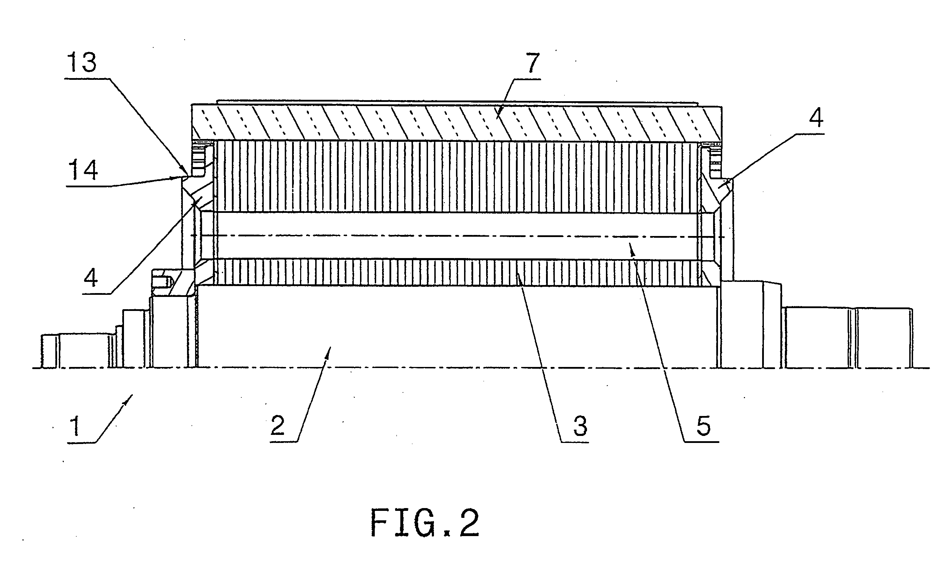

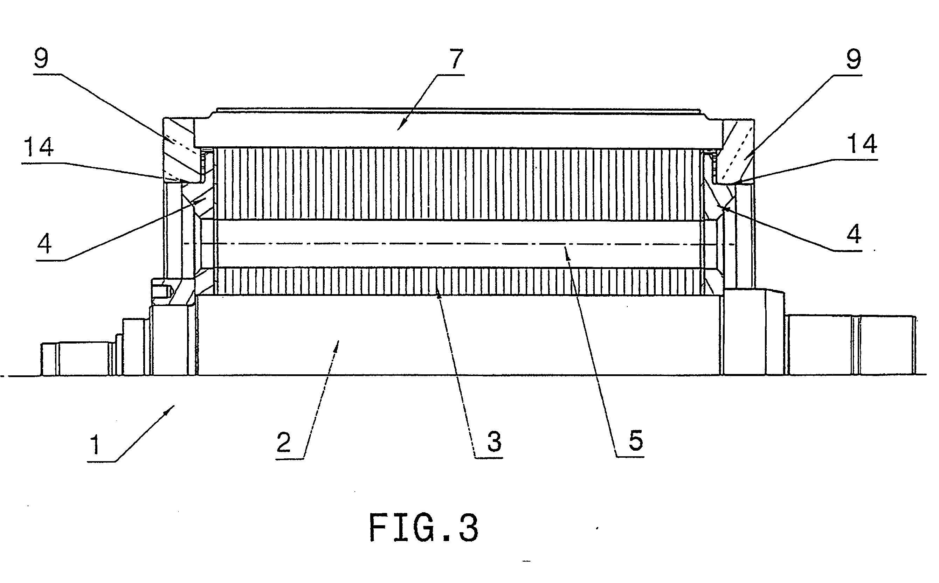

Fig. 2 zeigt einen Schnitt durch einen Rotor 1, bei dem die Pressplatten 4 Einrichtungen 13 zur formschlüssigen Verbindung mit dem jeweiligen Kurzschlussring 9 (siehe Fig. 3) aufweisen. Die Einrichtungen 13 zur formschlüssigen Verbindung sind durch eine ringförmige Stufe 14 auf jeder Pressplatte 4 gebildet. Auf dieser ringförmigen Stufe 14 kann sich der entsprechend gestaltete Kurzschlussring 9 abstützen, wie in Fig. 3 dargestellt.

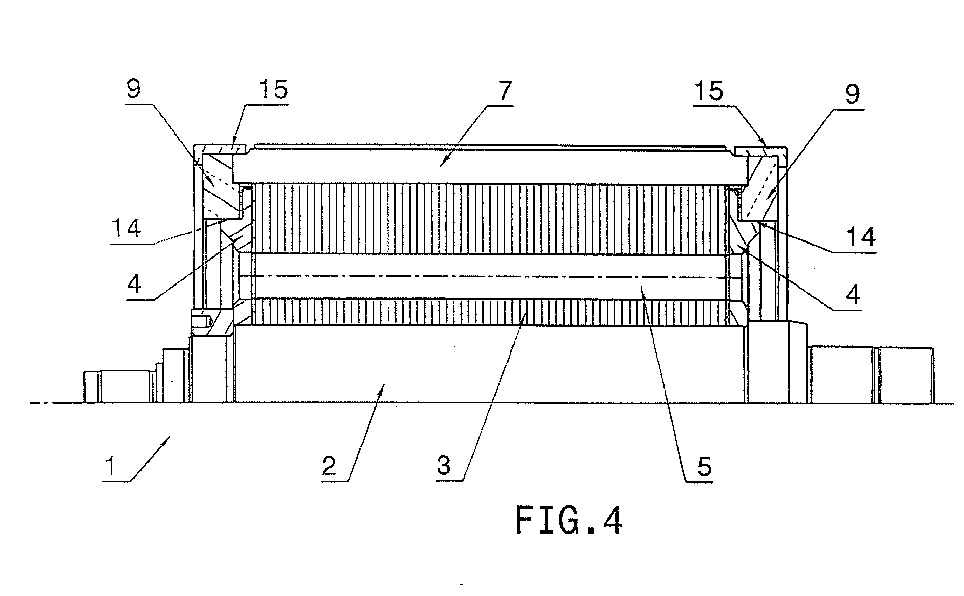

Wie in Fig. 4 dargestellt, wird ein entsprechend gestalteter Kurzschlussring 9 durch eine sogenannte Schrumpfkappe 15 gegen die ringförmige Stufe 14 an den Pressplatten 4 gepresst. Im Gegensatz zu bekannten Schrumpfringen 12 (siehe Fig. 1), weisen die Schrumpfkappen 15 Vorteile hinsichtlich der Stabilität auf. Darüber hinaus ist die Montage von Schrumpfkappen 15 leichter, da durch den Absatz der Schrumpfkappen 15 ein axialer Anschlag für die Kurzschlussringe 9 gebildet wird, durch den die exakte Position der Schrumpfkappen 15 in axialer Riuchtung festgelegt wird. Dadurch, dass die Schrumpfkappen 15 die Kurzschlussringe 9 auf die ringförmige Stufe 14 an den Pressplatten 4 pressen, wird die Masse des Gesamtsystems erhöht und das Problem der Eigenresonanzen reduziert. Durch die Schrumpfkappen 15 zusammen mit der formschlüssigen Verbindung zwischen den Kurzschlussringen 9 und den Pressplatten 4 wird auch eine stabilere Konstruktion des Käfigläufers erzielt, welche auch bei hohen Drehzahlen des Rotors 1 zu geringen Verformungen des Kurzschlusskäfigs führt. In der Folge ist die Gefahr eines Bruchs der Kurzschlussstäbe 7 verringert.

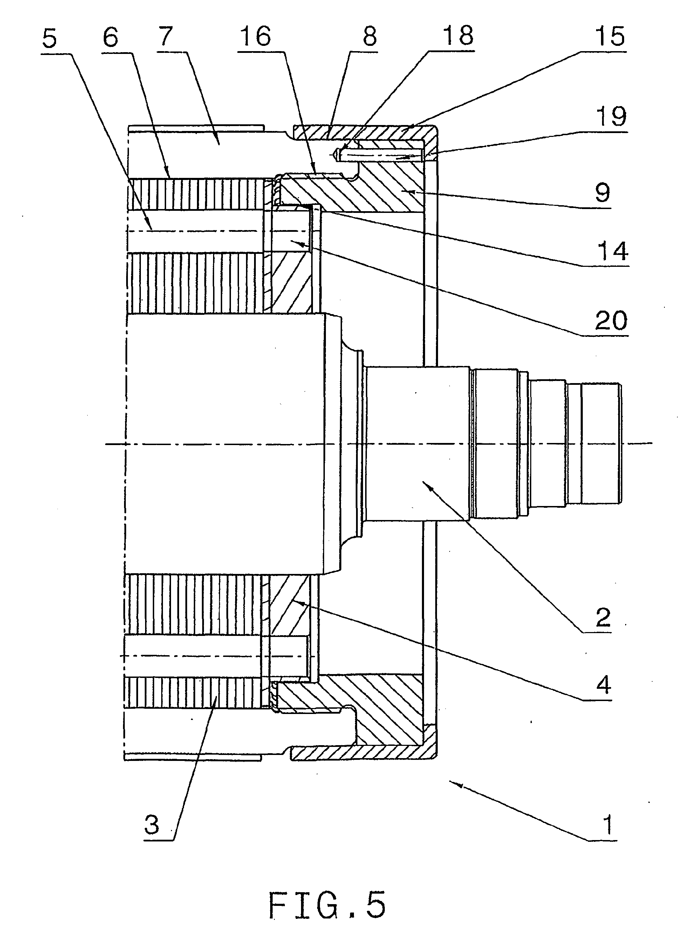

Fig. 5 zeigt einen Rotor 1 für Asynchronmaschinen, wobei die Verbindung zwischen den Kurzschlussstäben 7 und den Kurzschlussringen 9 durch Verschrauben hergestellt wird. Zu diesem Zweck sind die den Kurzschlussringen 9 zugewandten Flächen der Enden 8 der Kurzschlussstäbe 7 und die den Enden 8 der Kurzschlussstäbe 7 zugewandten Flächen der Kurzschlussringe 9 mit entsprechend komplementär gestalteten Gewinden 16 versehen. Auf diese Weise kann eine Verbindung zwischen den Kurzschlussstäben 7 und den Kurzschlussringen 9 in rascher und einfacher Weise durch Aufschrauben des Kurzschlussringes 9 hergestellt werden. Die elektrische Verbindung zwischen den Kurzschlussstäben 7 und Kurzschlussringen 9 wird ebenfalls durch das Gewinde 16 gewährleistet, ohne dass aufwändige Löt- oder Schweißarbeiten notwendig sind. Um zu verhindern, dass sich die Verbindung zwischen den Kurzschlussstäben 7 und Kurzschlussringen 9 ungewollt löst, kann eine Einrichtung 17 zur Sicherung der Schraubverbindung zwischen den Enden 8 der Kurzschlussstäbe 7 und den Kurzschlussringen 9 vorgesehen sein. Eine derartige Sicherungseinrichtung 17 kann beispielsweise durch einen in entsprechenden Bohrungen 18 in zumindest einem Kurzschlussstab 7 und dem Kurzschlussring 9 anordenbaren Sicherungsstift 19 gebildet sein. Dabei ist es von Vorteil, wenn die Bohrungen 18 zur Aufnahme des Sicherungsstiftes 19 oder dgl. in axialer Richtung und unterhalb der Schrumpfkappe 15 angeordnet sind. Dadurch wird der Sicherungsstift 19 bei komplettiertem Rotor 1 durch die Schrumpfkappe 15 in seiner Lage gehalten.

Schließlich sei noch erwähnt, dass in den Pressplatten 4 Öffnungen 20 in Übereinstimmung mit den Öffnungen 5 im Rotorblechpaket 3 vorgesehen sein können. Diese Öffnungen 20 in den Pressplatten 4 dienen einerseits zur Aufnahme von entsprechenden Verbindungsschrauben (nicht dargestellt) sowie zur Führung eines allfälligen Kühlmediums durch die Öffnungen 5 im Rotorblechpaket 3.

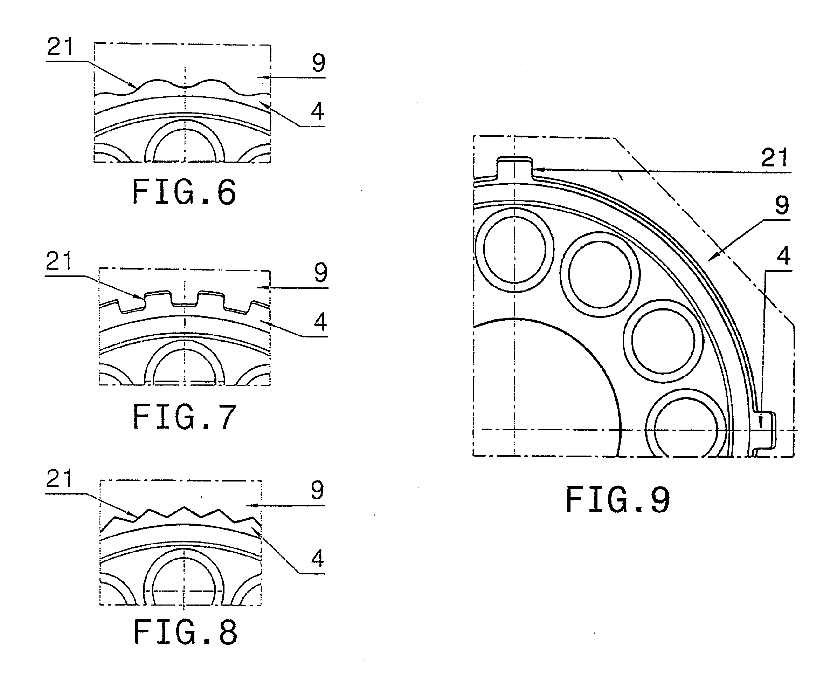

Die Figuren 6-9 zeigen Ausschnitte von Seitenansichten auf den Rotor 1 mit erfindungsgemäß formschlüssiger Verbindung zwischen den Pressplatten 4 und dem Kurzschlussring 9 in tangentialer Richtung. Die formschlüssige Verbindung der Pressplatte 4 mit dem Kurzschlussring 9 in tangentialer Richtung wird durch entsprechende komplementär gestaltete Ausformungen 21 erreicht. Bei der Ausführungsform gemäß Fig. 6 sind die Ausformungen 21 wellenförmig ausgebildet. Bei der Ausgestaltung gemäß Fig. 7 sind die Ausformungen rechteckig ausgebildet. Bei der Ausführungsform gemäß Fig. 8 sind die Ausformungen 21 dreieckig ausgebildet. Schließlich zeigt Fig. 9 eine Variante, bei der in Umfangsrichtung gesehen in Winkelabständen von jeweils 90° insgesamt vier rechteckförmige Ausformungen 21 vorgesehen sind. Bei den Varianten gemäß den Figuren 7, 8 und 9 ist es von Vorteil, wenn die Kanten der rechteckigen oder dreieckigen Ausformungen 21 entsprechend abgerundet ausgeführt sind.

## Patentansprüche

1. Rotor (1) für Asynchronmaschinen, mit einer Rotorwelle (2), einem mit der Rotorwelle (2) drehfest verbundenen und durch seitliche Pressplatten (4) abgeschlossenen Rotorblechpaket (3) mit Nuten (6) zur Aufnahme von Kurzschlussstäben (7), welche an den Enden (8) über Kurzschlussringe (9) miteinander verbunden sind, und mit Einrichtungen (11) zur Sicherung der Verbindung zwischen den Enden (8) der Kurzschlussstäbe (7) und den Kurzschlussringen (9), wobei jede Pressplatte (4) eine Einrichtung (13) zur formschlüssigen Verbindung mit dem jeweiligen Kurzschlussring (9) aufweist, **dadurch gekennzeichnet, dass** jede Pressplatte (4) mit dem jeweiligen Kurzschlussring (9) in tangentialer Richtung durch komplementär gestaltete Ausformungen (21) in der Pressplatte (4) und am Kurzschlussring (9) in Umfangsrichtung formschlüssig verbunden ist.

2. Rotor (1) nach Anspruch 1, **dadurch gekennzeichnet, dass** jede Pressplatte (4) eine ringförmige Stufe (14) zur Auflage zumindest eines Teiles des Kurzschlussringes (9) aufweist.

3. Rotor (1) nach Anspruch 1 oder 2, **dadurch gekennzeichnet, dass** die Einrichtungen (11) zur Sicherung der Verbindung zwischen den Enden (8) der Kurzschlussstäbe (7) und den Kurzschlussringen (9) durch Schrumpfkappen (15) gebildet sind.

4. Rotor (1) nach Anspruch 3, **dadurch gekennzeichnet, dass** die Schrumpfkappen (15) im Wesentlichen L-förmigen Umfangsquerschnitt aufweisen.

5. Rotor (1) nach Anspruch 3 oder 4, **dadurch gekennzeichnet, dass** die Schrumpfkappen (15) aus antimagnetischem Material gebildet sind.

6. Rotor (1) nach einem der Ansprüche 1 bis 5, **dadurch gekennzeichnet, dass** die Ausformungen (21) wellenförmig, rechteckig oder dreieckig ausgebildet sind.

7. Rotor (1) nach einem der Ansprüche 1 bis 6, **dadurch gekennzeichnet, dass** die Enden (8) der Kurzschlussstäbe (7) mit den Kurzschlussringen (9) verlötet oder verschweißt sind.

8. Rotor (1) nach einem der Ansprüche 1 bis 7, **dadurch gekennzeichnet, dass** die Pressplatten (4) Öffnungen (20) in Übereinstimmung mit den Öffnungen (5) im Rotorblechpaket (3) aufweisen.

9. Rotor (1) nach einem der Ansprüche 1 bis 8, **dadurch gekennzeichnet, dass** die Nuten (6) zur Aufnahme der Kurzschlussstäbe (7) im Rotorblechpaket (3) offen sind.

10. Rotor (1) nach einem der Ansprüche 1 bis 9, **dadurch gekennzeichnet, dass** die Nuten (6) zur Aufnahme der Kurzschlussstäbe (7) im Rotorblechpaket (3) zumindest teilweise geschlossen sind.

## Claims

1. A rotor (1) for asynchronous machines, comprising a rotor shaft (2), a rotor lamination stack (3) connected for co-rotation with the rotor shaft (2) and confined by lateral press plates (4) and comprising grooves (6) for accommodating short circuit rods (7) connected at their ends (8) via short circuit rings (9), and means (11) for safeguarding the connection between the ends (8) of the short circuit rods (7) and the short circuit rings (9), wherein each press plate (4) comprises means (13) for positive-fit connection with the respective short circuit ring (9), **characterized in that** each press plate (4) is connected in a positive-locking manner with the respective short circuit ring (9) in tangential direction by complementarily designed shapings (21) in the press plate (4) and at the short circuit ring (9) in circumferential direction.

2. The rotor (1) according to claim 1, **characterized in that** each press plate (4) comprises an annular step (14) for supporting at least a part of the short circuit ring (9).

3. The rotor (1) according to claims 1 or 2, **characterized in that** the means (11) for safeguarding the connection between the ends (8) of the short circuit rods (7) and the short circuit rings (9) are formed by shrinkage caps (15).

4. The rotor (1) according to claim 3, **characterized in that** the shrinkage caps (15) have a substantially L-shaped circumferential cross section.

5. The rotor (1) according to claims 3 or 4, **characterized in that** the shrinkage caps (15) are formed of an anti-magnetic material.

6. The rotor (1) according to any of claims 1 to 5, **characterized in that** the shapings (21) are of wave-like, rectangular or triangular design.

7. The rotor (1) according to any of claims 1 to 6, **characterized in that** the ends (8) of the short circuit rods (7) are soldered or welded with the short circuit rings (9).

8. The rotor (1) according to any of claims 1 to 7, **characterized in that** the press plates (4) comprise openings (20) in correspondence with the openings (5) in the rotor lamination stack (3).

9. The rotor (1) according to any of claims 1 to 8, **characterized in that** the grooves (6) are open for accommodating the short circuit rods (7) in the rotor lamination stack (3).

10. The rotor (1) according to any of claims 1 to 9, **characterized in that** the grooves (6) are at least partially closed for accommodating the short circuit rods (7) in the rotor lamination stack (3).

## Revendications

1. Rotor (1) pour machines asynchrones, comprenant un arbre de rotor (2), une pile de tôles de rotor (3) reliée de manière solidaire en rotation à l'arbre de rotor (2) et se terminant par des panneaux de compression (4) latéraux et pourvue de rainures (6) servant à recevoir des barres en court-circuit (7), qui sont reliées les unes aux autres par l'intermédiaire d'anneaux en court-circuit (9) au niveau des extrémités (8), et comprenant des dispositifs (11) servant à assurer la liaison entre les extrémités (8) des barres en court-circuit (7) et les anneaux en court-circuit (9), sachant que chaque panneau de compression (4) présente un dispositif (13) destiné à être relié par complémentarité de forme à l'anneau en court-circuit (9) respectif, **caractérisé en ce que** chaque panneau de compression (4) est relié à l'anneau en court-circuit (9) respectif dans une direction tangentielle par des déformations (21), configurées de manière complémentaire, dans le panneau de compression (4) et au niveau de l'anneau en court-circuit (9) dans la direction périphérique.

2. Rotor (1) selon la revendication 1, **caractérisé en ce que** chaque panneau de compression (4) présente un palier (14) de forme annulaire servant à déposer au moins une partie de l'anneau en court-circuit (9).

3. Rotor (1) selon la revendication 1 ou 2, **caractérisé en ce que** les dispositifs (11) sont formés afin d'assurer la liaison entre les extrémités (8) des barres en court-circuit (7) et les anneaux en court-circuit (9) par des capuchons rétractables (15).

4. Rotor (1) selon la revendication 3, **caractérisé en ce que** les capuchons rétractables (15) présentent une section transversale périphérique essentiellement en forme de L.

5. Rotor (1) selon la revendication 3 ou 4, **caractérisé en ce que** les capuchons rétractables (15) sont formés à partir d'un matériau antimagnétique.

6. Rotor (1) selon l'une quelconque des revendications 1 à 5, **caractérisé en ce que** les déformations (21) sont réalisées de manière à présenter une forme d'onde, de manière rectangulaire ou triangulaire.

7. Rotor (1) selon l'une quelconque des revendications 1 à 6, **caractérisé en ce que** les extrémités (8) des barres en court-circuit (7) sont brasées ou soudées aux anneaux en court-circuit (9).

8. Rotor (1) selon l'une quelconque des revendications 1 à 7, **caractérisé en ce que** les panneaux de compression (4) présentent des ouvertures (20) coïncidant avec les ouvertures (5) dans la pile de tôles de rotor (3).

9. Rotor (1) selon l'une quelconque des revendications 1 à 8, **caractérisé en ce que** les rainures (6) servant à recevoir les barres en court-circuit (7) dans la pile de tôles de rotor (3) sont ouvertes.

10. Rotor (1) selon l'une quelconque des revendications 1 à 9, **caractérisé en ce que** les rainures (6) servant à recevoir les barres en court-circuit (7) dans la pile de tôles de rotor (3) sont au moins en partie fermées.
